# EUROPEAN PATENT APPLICATION

(11) **EP 4 810 670 A1**
(43) Date of publication of application: **23.09.2026**
(21) Application number: 24890846.9
(22) Date of filing: 15.11.2024
(51) Int. Cl.: C25B 11/091, C25B 11/054, C25B 11/073, C25B 1/04

(54) **CARBON NANOTUBE-SUPPORTED NITROGEN-DOPED CATALYST AND PREPARATION METHOD THEREFOR**

(30) Priority: 15.11.2023 CN 202311522192
(71) Applicant: China Petroleum & Chemical Corporation, Beijing 100728 (CN); Sinopec (Beijing) Research Institute of Chemical Industry Co., Ltd., Beijing 100013 (CN)
(72) Inventor: FENG, Yingjie, Beijing 100013 (CN); ZHOU, Yue, Beijing 100013 (CN); FU, Xiaoyue, Beijing 100013 (CN); ZHAO, Qingrui, Beijing 100013 (CN); FENG, Jing, Beijing 100013 (CN); LI, Wei, Beijing 100013 (CN); LIU, Dongbing, Beijing 100013 (CN); BAI, Jie, Beijing 100013 (CN); LI, Jiyu, Beijing 100013 (CN); ZHANG, Mingsen, Beijing 100013 (CN)
(74) Representative: Hoffmann Eitle
(86) International application number: PCT/CN2024/132484
(87) International publication number: WO 2025/103494

(57) **Abstract**

The present invention relates to the field of hydrogen production by water electrolysis, and discloses a carbon nanotube-supported nitrogen-doped catalyst, wherein the catalyst has a carbon nanotube structure as carrier, with cobalt and ruthenium as active components, wherein the content of cobalt element is 30-45wt%, the content of ruthenium element is 1-7wt%, and relative to all ruthenium elements, the proportion of ruthenium element existing in the form of RuN is 60wt%-90wt%. The graphitic structure of this catalyst is conducive to charge conduction. Ru is uniformly loaded on the carrier surface through low-temperature reduction process and interaction with defect sites on the carrier surface, and then forms interactions with N elements and metallic Co after high-temperature calcining, thereby improving the hydrogen evolution catalytic activity of the catalyst.

## Description

### Technical Field

The present invention relates to the field of hydrogen production by water electrolysis, and specifically, to a carbon nanotube-supported nitrogen-doped catalyst and preparation method therefor, as well as its use in hydrogen production by water electrolysis.

### Background of Art

Currently, Pt-based catalysts are still the mainstream catalysts for electrocatalytic hydrogen evolution. However, Pt's scarcity in nature and high price are the main factors hindering its development. Therefore, it is necessary to continuously develop high-activity and low-cost catalysts to reduce the production cost of electrolyzers.

Compared to traditional Pt-based HER catalyst materials, Ru-based catalysts exhibit numerous advantages: 1. Ru is the cheapest platinum group metal element, costing only 1/3 of Pt; 2. Ru exhibits good chemical inertness in alkaline conditions and a bond strength of Ru-H close to that of Pt-H (Ru-H bond: 65 kcal mol⁻¹; Pt-H bond: 62 kcal mol⁻¹). However, the excessively strong binding energy between Ru and hydrogen intermediates is unfavorable for H₂ desorption during the catalytic reaction process, reducing the overall reaction kinetics, which is a key factor limiting its HER activity. Alloying Ru can optimize the electronic structure of the catalyst, increase the transition metal-H bond energy, reduce the Ru-H bond energy, to promote the adsorption/activation of H₂O molecules and the adsorption/desorption process of H intermediates during alkaline HER, thereby achieving the goal of improving the HER catalytic activity of the catalyst. However, traditional heat treatment alloying processes tend to cause particle size enlargement and agglomeration/growth of metal particles during electrochemical processes, thereby affecting the activity and stability of the catalyst.

### Summary of the Invention

The purpose of the present invention is to overcome the problems existing in the art of the high process cost and complex operation of the Ru-loading process of Ru-containing water electrolysis hydrogen evolution catalysts, and the low activity of Ru-containing water electrolysis hydrogen evolution catalysts.

Through in-depth research, the inventors of the present invention have found that by ensuring that in a carbon nanotube-supported nitrogen-doped catalyst containing Ru and Co as active components, the proportion of ruthenium element existing in the form of RuN is within a specific range, the resulting catalyst can solve the technical problems of existing Ru-containing catalysts, and the obtained catalyst exhibits excellent hydrogen evolution catalytic activity.

Specifically, the present invention provides a carbon nanotube-supported nitrogen-doped catalyst, wherein the catalyst has a carbon nanotube structure as carrier, with cobalt and ruthenium as active components, wherein, relative to the total amount of the catalyst, the content of cobalt element is 30-45wt%, the content of ruthenium element is 1-7wt%, and, relative to all ruthenium elements, the proportion of ruthenium element existing in the form of RuN is 60wt%-90wt%, preferably 65wt%-88wt%, more preferably 70wt%-85wt%.

In another aspect, the present invention provides a method for preparing a carbon nanotube-supported nitrogen-doped catalyst. This method uses a zeolitic imidazolate framework (ZIF)-like material as a precursor to construct a highly active porous carbon-based carrier, and through nitrogen doping, in-situ reduction loading, and secondary high-temperature calcining, causes Ru and Co to form metal nitrides (metal-N), and ensures that the proportion of ruthenium element existing in the form of RuN is within a specific range, whereby the resulting catalyst can achieve the object of the present invention.

More specifically, the present invention provides a method for preparing a carbon nanotube-supported nitrogen-doped catalyst, wherein said preparation method comprises the following steps:
S1. Mixing a cobalt source, a zinc source, and a nitrogen-containing organic ligand in a solvent to carry out a first reaction, separating and drying to obtain a CoZn-ZIF precursor;
S2. Under an inert gas atmosphere and in the presence of a nitrogen doping agent, carbonizing and nitrogen-doping the CoZn-ZIF precursor obtained in S1 to obtain a carbon nanotube-coated cobalt structural material, wherein in said nitrogen doping, an organic compound having 3 or more nitrogen atoms as the nitrogen doping agent is used;
S3. Bringing the structural material obtained in S2 into contact with a ruthenium source to perform ruthenium loading, and reducing the ruthenium loaded onto the structural material with a reducing agent;
S4. Calcining the product from step S3 at 600-1000°C to obtain the carbon nanotube-supported nitrogen-doped catalyst.

A third aspect of the present invention provides an electrolysis electrode (particularly a cathode electrode), comprising the carbon nanotube-supported nitrogen-doped catalyst of the present invention, or a carbon nanotube-supported nitrogen-doped catalyst prepared by the method of the present invention.

A fourth aspect of the present invention provides a method for hydrogen production by water electrolysis, characterized in that it uses the carbon nanotube-supported nitrogen-doped catalyst of the present invention, or a carbon nanotube-supported nitrogen-doped catalyst prepared by the method of the present invention.

A fifth aspect of the present invention provides a method for hydrogen production by water electrolysis, wherein, in an alkaline or alkaline membrane water electrolysis hydrogen production reaction, the carbon nanotube-supported nitrogen-doped catalyst of the present invention is used, or a carbon nanotube-supported nitrogen-doped catalyst prepared by the method of the present invention is used.

Through the above technical solutions, the present invention has the following beneficial effects:
The present invention combines the advantages of Zn-based zeolitic imidazolate framework materials (Zn-based ZIF materials) and Co-based zeolitic imidazolate framework materials (Co-based ZIF materials) to prepare a nano-sized CoZn bimetallic ZIF precursor material. Subsequently, during high-temperature treatment accompanied by carbonizing and nitrogen-doping, the volatilization of Zn generates a large number of defect sites. The abundant defect sites on the carbon nanotubes are conducive to the coordination adsorption of Ru. Further low-temperature in-situ reduction enables the noble metal Ru to be uniformly loaded onto the carbon-based carrier; further secondary high-temperature calcining causes Ru to form chemical bonds with N elements to generate active sites, while Ru and Co exert a synergistic effect. Thus, the catalyst of the present invention exhibits excellent electrocatalytic hydrogen evolution performance.

### Brief description of the drawings

Figure 1 is a scanning electron micrograph of Zn/Co-ZIF of Example 1;
Figure 2 is a scanning electron micrograph of Zn/Co-ZIF after high-temperature calcining of Example 1;
Figure 3 is a high-resolution transmission electron micrograph of Zn/Co-ZIF after high-temperature calcining of Example 1;
Figure 4 is the energy-dispersive X-ray spectroscopy (EDS) mapping result of Zn/Co-ZIF after high-temperature calcining of Example 1;
Figure 5 is a high-resolution transmission electron micrograph and Fourier transform pattern of the sample after high-temperature calcining of Zn/Co-ZIF of Example 1;
Figure 6 is a transmission electron micrograph of the sample after Ru loading and calcining of Example 1;
Figure 7 is a high-resolution transmission electron micrograph and Fourier transform pattern of the sample after Ru loading and calcining of Example 1;

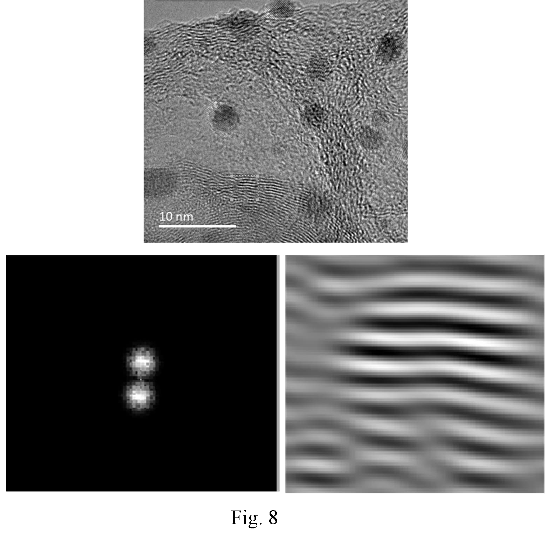

Figure 8 is a high-resolution transmission electron micrograph and Fourier transform pattern of the sample after Ru loading and calcining of Example 1;
Figure 9 is an XPS spectrum of the sample after high-temperature calcining of Zn/Co-ZIF material of Example 1;
Figure 10 is an XPS spectrum of the sample after Ru loading and calcining of Example 1;
Figure 11 is an XPS comparison diagram of N element in samples before and after Ru loading of Example 1;
Figure 12 is an XRD spectrum of samples before and after Ru loading of Example 1;
Figure 13 shows the LSV data of the catalyst of Example 1;
Figure 14 shows the Tafel data of the catalyst of Example 1 of the present invention;
Figure 15 shows the Cdl data of the catalyst of Example 1 of the present invention;
Figure 16 shows the LSV data of the PtC catalyst of Comparative Example 1;

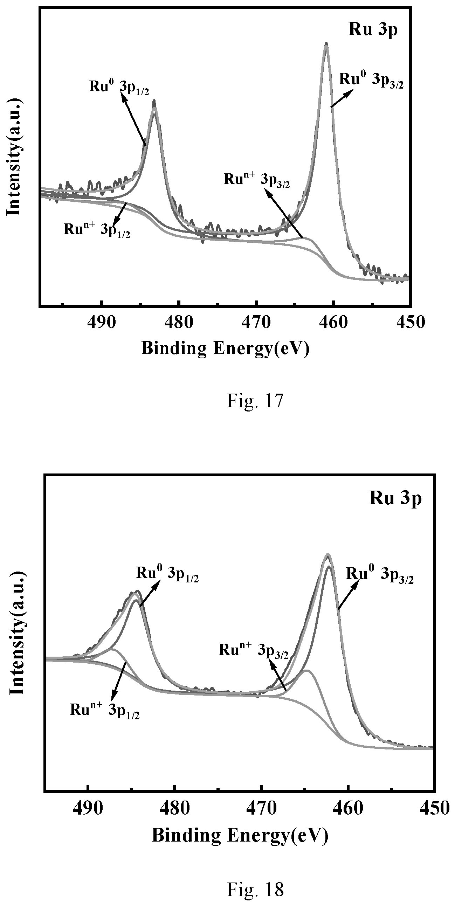

Figure 17 is the XPS spectrum of Ru of Comparative Example 1;
Figure 18 is the XPS spectrum of Ru of Comparative Example 2;

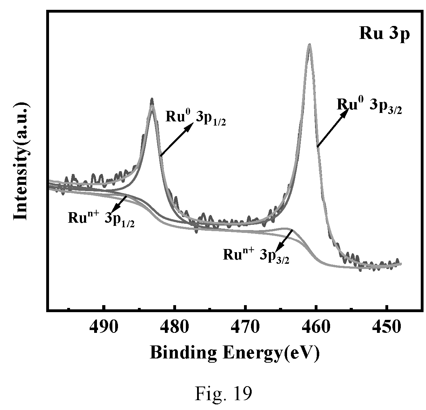

Figure 19 is the XPS spectrum of Ru of Comparative Example 3.

### Detailed description

Hereinafter, specific embodiments of the present invention will be described in detail, but it should be pointed out that the scope of the present invention is not limited by these specific embodiments, but is defined by the appended claims.

In the context of this specification, except for what is explicitly indicated, any item or matter not mentioned is directly applicable to those known in the art without any changes. Moreover, any of the embodiments described herein can be freely combined with one or more other embodiments described herein, and the resulting technical solutions or technical ideas are regarded as part of the original disclosure or the original record of the present invention, and should not be regarded as new content that has not been disclosed or anticipated in this specification, unless those skilled in the art believe that the combination is obviously unreasonable.

Unless expressly indicated otherwise, all percentages, parts, ratios, etc., mentioned in this specification are by weight, unless weight-based measurement contradicts the common knowledge in the art.

Hereinafter, specific embodiments of the present invention will be described in detail, but it should be pointed out that the scope of the present invention is not limited by these specific embodiments, but is defined by the appended claims.

In the context of the present invention, unless otherwise specified, the physical property values of substances (such as boiling point) are measured values at normal temperature/room temperature (25°C) and atmospheric pressure (101325 Pa).

The first aspect of the present invention provides a carbon nanotube-supported nitrogen-doped catalyst, wherein the catalyst has a carbon nanotube structure as carrier, with cobalt and ruthenium as active components, wherein, relative to the total amount of the catalyst, the content of cobalt element is 30-45wt%, the content of ruthenium element is 1-7wt%, and, relative to all ruthenium elements, the proportion of ruthenium element existing in the form of RuN is 60wt%-90wt%, preferably 65wt%-88wt%, more preferably 70wt%-85wt%.

The carbon nanotube-supported nitrogen-doped catalyst of the present invention has nano-sized Ru loaded on its surface. The bonding between Ru and N elements in the carrier enhances its catalytic activity, and Ru and Co produce a synergistic effect, effectively improving the activity of the Ru-containing water electrolysis hydrogen evolution catalyst.

In an embodiment of the present invention, in said catalyst, relative to all ruthenium element, the proportion of ruthenium element existing in the form of RuN is 70wt%, 71wt%, 72wt%, 73wt%, 74wt%, 75wt%, 76wt%, 77wt%, 78wt%, 79wt%, 80wt%, 81wt%, 82wt%, 83wt%, 84wt%, 85wt%, 86wt%, 87wt%, 88wt% or 89wt%.

In an embodiment of the present invention, the content of nitrogen element of the catalyst is 2-5wt%.

In an embodiment of the present invention, the content of nitrogen element of the catalyst is 2wt%, 2.5wt%, 3wt%, 3.5wt%, 4wt%, 4.5wt% or 5wt%.

In an embodiment of the present invention, said nitrogen element exists in at least one form selected from metal-N, pyridinic nitrogen, and graphitic nitrogen.

In the present invention, the forms of cobalt and ruthenium as active components are not particularly limited; they may exist in the form of elemental metal, metal alloy, metal-N. In this case, the active components of cobalt and ruthenium include elemental Co, elemental Ru, RuN, CoN, RuCo alloy, but are not limited thereto.

In an embodiment of the present invention, in said catalyst, the average particle size of metallic ruthenium is 2-5 nm.

In an embodiment of the present invention, in said catalyst, the diameter of the carbon nanotubes is 30-70 nm.

In an embodiment of the present invention, the oxygen content is 2wt% or less, preferably 1% or less, further preferably 0.5%. The oxygen element mainly comes from surface hydroxyl O and a small amount of vacancy oxygen, but the overall oxygen element content is very small. Therefore, in an embodiment of the present invention, the catalyst of the present invention substantially does not contain oxygen.

In an embodiment of the present invention, in said catalyst, the zinc content is 5wt% or less, preferably 4wt% or less, 3wt% or less, 2wt% or less, or 1wt% or less, further preferably substantially free of Zn.

The second aspect of the present invention provides a method for preparing a carbon nanotube-supported nitrogen-doped catalyst, wherein said preparation method comprises the following steps:
S1. Mixing a cobalt source, a zinc source, and a nitrogen-containing organic ligand in a solvent to carry out a first reaction, separating and drying to obtain a CoZn-ZIF precursor;
S2. Under an inert gas atmosphere and in the presence of a nitrogen doping agent, carbonizing and nitrogen-doping the CoZn-ZIF precursor obtained in S1 to obtain a carbon nanotube-coated cobalt structural material, wherein in said nitrogen doping, an organic compound having 3 or more nitrogen atoms as the nitrogen doping agent is used;
S3. Bringing the structural material obtained in S2 into contact with a ruthenium source to perform ruthenium loading, and reducing the ruthenium loaded onto the structural material with a reducing agent;
S4. Calcining the product from step S3 at 600-1000°C to obtain the carbon nanotube-supported nitrogen-doped catalyst.

In the present invention, by combining the advantages of Zn-based zeolitic imidazolate framework materials (Zn-based ZIF materials) and Co-based zeolitic imidazolate framework materials (Co-based ZIF materials), a nano-sized CoZn bimetallic ZIF precursor material is prepared. Through high-temperature pyrolysis carbonization and nitrogen doping, an N-doped carbon nanotube-coated Co-based carrier material is obtained. Moreover, due to the volatilization of Zn generating a large number of defect sites, the abundant defect sites on the carbon nanotube as carbon carrier are conducive to the coordination adsorption of Ru. Further low-temperature in-situ reduction enables the noble metal Ru to be uniformly loaded onto the carbon-based carrier; further secondary high-temperature calcining causes Ru to form chemical bonds with N elements to generate active sites, and, relative to all ruthenium element, ensures that the proportion of ruthenium element existing in the form of RuN is within the specific range of the present invention, while Ru and Co exert a synergistic effect. Thereby, the catalyst of the present invention is obtained, exhibiting excellent electrocatalytic hydrogen evolution performance.

In an embodiment of the present invention, the method for preparing the carbon nanotube-supported nitrogen-doped catalyst of the present invention produces the aforementioned carbon nanotube-supported nitrogen-doped catalyst of the present invention.

In an embodiment of the present invention, in step S1 described above, said cobalt source is selected from water-soluble cobalt salts, preferably selected from at least one of cobalt chloride and cobalt nitrate. The cobalt source may exist in a form of containing or not containing hydration water, for example, it may be Co(NO₃)₂·6H₂O.

In an embodiment of the present invention, in step S1 described above, said zinc source is selected from water-soluble zinc salts, preferably selected from at least one of zinc nitrate, zinc sulfate, and zinc chloride. The zinc source may exist in a form of containing or not containing hydration water, for example, it may be Zn(NO₃)₂·6H₂O.

In an embodiment of the present invention, in step S1 described above, the nitrogen-containing organic ligand is an optionally substituted imidazole compound, preferably 2-methylimidazole. In an embodiment of the present invention, as substituents for "optionally substituted", they may be selected from C₁-C₆ alkyl, C₂-C₆ alkenyl, C₂-C₆ alkynyl, C₆-C₁₀ aryl, and C₆-C₁₀ aryl optionally substituted by C₁-C₆ alkyl; preferably, as substituents for "optionally substituted", they may be selected from C₁-C₄ alkyl, C₂-C₄ alkenyl, C₂-C₄ alkynyl, phenyl, naphthyl, and phenyl optionally substituted by C₁-C₄ alkyl; more preferably, as substituents for "optionally substituted", they may be selected from methyl, ethyl, propyl, isopropyl, butyl, isobutyl, tert-butyl, sec-butyl, pentyl and its isomers, hexyl and its isomers, phenyl, benzyl, and xylyl. In an embodiment of the present invention, the number for "optionally substituted" is not particularly limited, with the upper limit of the number of substitutable positions as the maximum number for "optionally substituted", for example, it may be 1, 2, 3, or 4.

In an embodiment of the present invention, in step S1 described above, the weight ratio of the cobalt source, the zinc source, and the nitrogen-containing organic ligand is (0.5-4):1:(2-14), preferably (0.8-3):1:(3-12). More preferably, the weight ratio of cobalt source to zinc source is 1 or more and 2.5 or less.

In an embodiment of the present invention, in step S1 described above, said solvent is selected from C₁-C₄ monohydric alcohols, more preferably methanol or ethanol.

In an embodiment of the present invention, in step S1 described above, based on the total weight of said cobalt source, said zinc source, and said nitrogen-containing organic ligand being 1g, the amount of said solvent is 20-60 ml, preferably 35-50 ml.

In an embodiment of the present invention, in step S1 described above, the temperature of said first reaction is 20-30°C, for example, it can be room temperature, and the reaction time of the first reaction is 10-36 h.

In an embodiment of the present invention, in step S1 described above, after said first reaction, separation is performed by any one means selected from filtration and centrifugation to obtain a reaction product.

In an embodiment of the present invention, in step S1 described above, the reaction product of the first reaction is dried, said drying temperature is 40-80°C, preferably 50-70°C, to obtain the CoZn-ZIF precursor.

In the present invention, in step S2, the CoZn-ZIF precursor obtained in step S1 is subjected to carbonizing and nitrogen-doping under an inert gas atmosphere and in the presence of a nitrogen doping agent to obtain a carbon nanotube-coated cobalt structural material, wherein an organic compound having 3 or more nitrogen atoms is used as the nitrogen doping agent in said nitrogen doping.

In an embodiment of the present invention, in step S2, carbonizing and nitrogen doping are carried out simultaneously. Specifically, carbonizing and nitrogen doping are carried out at high temperature under an inert gas atmosphere and in the presence of a nitrogen doping agent.

In one embodiment of the present invention, in step S2, the condition for carbonizing and nitrogen doping includes: heating at a rate of 1-10°C/min to a temperature of 600-1200°C and holding for 1.5-4 hours, preferably the heating rate is 3-8°C/min, preferably heating to 700-1100°C, preferably holding for 2-3 hours.

In an embodiment of the present invention, in step S2, an organic compound having 3 or more nitrogen atoms is used as the nitrogen doping agent, preferably said organic compound having 3 or more nitrogen atoms is a 5-10 membered cyclic organic compound having 3 or more ring-forming nitrogen atoms, preferably selected from at least one of triazole-based compounds, triazine-based compounds, and melamine, more preferably selected from at least one of optionally substituted 1,2,3-triazole, optionally substituted 1,2,4-triazole, optionally substituted 1,2,3-triazine, optionally substituted 1,2,4-triazine, optionally substituted 1,2,3-triazine, and melamine. In an embodiment of the present invention, as substituents for "optionally substituted", they may be selected from C₁-C₆ alkyl, C₂-C₆ alkenyl, C₂-C₆ alkynyl, C₆-C₁₀ aryl, and C₆-C₁₀ aryl optionally substituted by C₁-C₆ alkyl; preferably, as substituents for "optionally substituted", they may be selected from C₁-C₄ alkyl, C₂-C₄ alkenyl, C₂-C₄ alkynyl, phenyl, naphthyl, and phenyl optionally substituted by C₁-C₄ alkyl; more preferably, as substituents for "optionally substituted", they may be selected from methyl, ethyl, propyl, isopropyl, butyl, isobutyl, tert-butyl, sec-butyl, pentyl and its isomers, hexyl and its isomers, phenyl, benzyl, and xylyl. In an embodiment of the present invention, the number for "optionally substituted" is not particularly limited, with the upper limit of the number of substitutable positions as the maximum number for "optionally substituted", for example, it may be 1, 2, or 3.

In an embodiment of the present invention, in step S2, the weight ratio of the CoZn-ZIF precursor to the nitrogen doping agent is 1:0.1-5, preferably 1:0.2-1.

In the present invention, through step S2, a carbon nanotube-coated cobalt structural material is obtained. Through step S2, most Zn atoms can be volatilized and defect sites can be generated in the carbon-based structure. These defect sites can enhance the adsorption effect of Ru atoms and improve the dispersion of Ru on its surface.

In the present invention, in step S3, the carbon nanotube-coated cobalt structural material obtained in step S2 is brought into contact with a ruthenium source to perform ruthenium loading to produce a ruthenium-adsorbed structural material, and a reducing agent is used to carry out in-situ reduction of the ruthenium loaded onto the structural material. That is, step S3 includes a contact step of bringing the carbon nanotube-coated cobalt structural material into contact with a ruthenium source to perform ruthenium loading to produce a ruthenium-adsorbed structural material; and a reduction step of using a reducing agent to carry out in-situ reduction of the ruthenium loaded onto the structural material.

In one embodiment of the present invention, in step S3, the weight ratio of the structural material obtained in S2 to the ruthenium source is 1-100:1, preferably 5-50:1, further preferably 5-20:1.

In an embodiment of the present invention, in step S3, said ruthenium source is not limited and may be selected from water-soluble ruthenium salts, preferably ruthenium chloride (RuCl₃). The ruthenium source may exist in a form of containing or not containing hydration water, for example, ruthenium chloride may be RuCl₃·3H₂O.

In an embodiment of the present invention, in step S3, the contact step where said structural material is brought into contact with said ruthenium source is carried out in the presence of a solvent, wherein said solvent is preferably a nitrogen-containing organic solvent, more preferably at least one of pyrrole, pyrazole, imidazole, pyridine, pyrimidine, pyrrolidinone, and N-vinylpyrrolidone.

In an embodiment of the present invention, in step S3, the solvent used in the contact step where said structural material is brought into contact with said ruthenium source is a weakly basic solvent. The weakly basic organic solvent is beneficial for the adsorption of Ru on the carrier surface. More preferably, said solvent is N-methylpyrrolidone (NMP).

In an embodiment of the present invention, in step S3, to be more conductive to adsorbing Ru ions, based on the total weight of the structural material obtained in S2 and said ruthenium source being 1g, the amount of solvent used in the contact step of S3 is 110-130mL.

In an embodiment of the present invention, in step S3, the contact condition for the contact step where said structural material is brought into contact with said ruthenium source includes: contact temperature is 40-80°C, preferably 50-70°C, contacting for 8-15 hours, preferably 10-12 hours. Preferably, when said structural material is brought into contact with said ruthenium source, the contacting is carried out under an ultrasonic condition; ultrasonic treatment may be performed for 1-5 hours.

In an embodiment of the present invention, in step S3, the product obtained after contacting is subjected to in-situ reduction to reduce the ruthenium salt to elemental ruthenium.

In an embodiment of the present invention, in step S3, the condition for the reduction step includes: contacting the reducing agent with the ruthenium-adsorbed structural material in the presence of a solvent, wherein said solvent is preferably a nitrogen-containing organic solvent, more preferably at least one of pyrrole, pyrazole, imidazole, pyridine, pyrimidine, pyrrolidinone, and N-methylpyrrolidone (NMP).

In an embodiment of the present invention, in step S3, the type of reducing agent in the reduction step is not particularly limited, as long as it can carry out in-situ reduction of Ru ions; preferably, said reducing agent is selected from NaBH₄ and/or hydrogen, preferably NaBH₄.

In an embodiment of the present invention, in step S3, in the reduction step, the weight ratio of said reducing agent to said ruthenium source is 4-15:1, preferably 5-10:1.

In an embodiment of the present invention, in step S3, the manner of adding the reducing agent is not particularly limited. To better mix the reducing agent with the Ru ion-adsorbed structural material so that the in-situ reduction reaction can proceed fully, the reducing agent can be first dissolved in a solvent, for example, the reducing agent can be dissolved in NMP, and then the solution containing the reducing agent can be added to the slurry containing the ruthenium-adsorbed structural material. The amount of the reducing agent mentioned in the present invention does not include the amount of solvent used to dissolve the reducing agent.

In an embodiment of the present invention, in step S3, the condition for the reduction step includes: directly adding a NaBH₄ solution to the solution obtained from contacting the structural material with the ruthenium source to obtain the ruthenium-adsorbed structural material, said solvent of the NaBH₄ solution is identical to the solvent in the contacting step.

In an embodiment of the present invention, in step S3, in the reduction step, the temperature of said reduction reaction is 15-40°C, preferably 20-30°C (e.g., room temperature), and the time is 0.5-2 hours, preferably 1-1.5 hours. In an embodiment of the present invention, in step S3, in the reduction step, after said reduction reaction, a precipitating agent is further added to precipitate the reduction product; preferably said precipitating agent is acetone. In an embodiment of the present invention, based on the amount of said reducing agent being 1g, the amount of acetone is 40-60mL.

In an embodiment of the present invention, in step S3, the product of the reduction reaction is dried, the drying condition includes: in vacuum, temperature 40-80°C, preferably 50-70°C, drying time 1.5-4 hours, preferably 2-3 hours.

In the present invention, in step S4, the reduction product obtained from step S3 is calcined at 600-1000°C to obtain the carbon nanotube-supported nitrogen-doped catalyst. Through the secondary high-temperature calcining, highly active RuN and RuCo alloy are formed, and the proportion of ruthenium element existing in the form of RuN is within the range of the present invention, significantly enhancing the activity of the catalyst.

In an embodiment of the present invention, in step S4, said calcining is carried out under an inert gas atmosphere.

In an embodiment of the present invention, in step S4, the calcining condition includes: heating at a rate of 5-20°C/min to a temperature of 600-1000°C and holding for 1.5-4 hours, preferably the heating rate is 8-15°C/min, preferably heating to 650-950°C, further preferably heating to 700-950°C, preferably holding for 2-3 hours.

In the present invention, the products obtained from each reaction or each step can be optionally washed. The solvent selected for washing can be arbitrarily chosen as needed, it can be an aqueous solvent or an organic solvent, as long as it does not destroy the product's structure/morphological structure; preferably, a volatile solvent is used, for example, anhydrous ethanol can be exemplified for washing. After washing, drying can be performed, and conventional drying conditions in the art can be used for drying, e.g. the drying condition mentioned above in the present invention. In the present invention, the inert gases in step S2 and step S4 are each independently selected from nitrogen and/or inert gases, preferably at least one of argon, helium, and neon. Preferably, the protective gas in both S2 and S4 is argon.

The contents of Ru and Co of the prepared carbon nanotube-supported nitrogen-doped catalyst are determined by ICP characterization. Transmission electron microscopy characterization shows that Ru has a particle size of 5 nm or less and it is basically distributed on the surface of the carbon tubes, which is within the detection range of XPS. The proportion of RuN is obtained by fitting the high-valent Ru and zero-valent Ru peaks separately from the Ru XPS spectrum, using Thermo Avantage software for fitting, and the proportion is calculated using the integrated peak area.

The third aspect of the present invention provides an electrolysis electrode, comprising the carbon nanotube-supported nitrogen-doped catalyst of the present invention, or the carbon nanotube-supported nitrogen-doped catalyst prepared by the method of the present invention.

The fourth aspect of the present invention provides a method for hydrogen production by water electrolysis, which uses the carbon nanotube-supported nitrogen-doped catalyst of the present invention, or the carbon nanotube-supported nitrogen-doped catalyst prepared by the method of the present invention. In the method for hydrogen production by water electrolysis, in an alkaline or alkaline membrane water electrolysis hydrogen production reaction, the carbon nanotube-supported nitrogen-doped catalyst of the present invention, or the carbon nanotube-supported nitrogen-doped catalyst prepared by the method of the present invention can be used.

In some embodiments of the present invention, the following technical solutions are provided.
[Solution 1] A Ru-containing water electrolysis hydrogen evolution catalyst, characterized in that said catalyst contains at least one of tubular graphitic carbon structure, layered graphitic carbon structure, and amorphous graphitic carbon structure; the metal Ru content in said catalyst is 1-7wt%, and the average particle size of metal Ru is 2-5 nm.
[Solution 2] The catalyst according to [Solution 1], characterized in that the Co element content in said catalyst is 35-48wt%, and/or, the Zn element content is 0.001-2.5wt%, and/or, the N element content is 2-5wt%, and/or, the C element content is 48-60wt%;
   preferably, the average particle size of said catalyst is 200-600 nm.
[Solution 3] A method for preparing a Ru-containing water electrolysis hydrogen evolution catalyst, wherein the preparation method comprises the following steps:
   S1. In the presence of a first solvent, mixing a cobalt source, a zinc source, and a nitrogen-containing organic ligand to perform a first mixing and a first reaction to obtain a precursor;
   S2. In the presence of a protective gas, performing a first calcining of said precursor;
   S3. In the presence of a second solvent, performing a second mixing of the product obtained in S2 and a ruthenium source, then performing a third mixing of said mixed material and a reducing agent and carrying out an in-situ reduction reaction;
   S4. In the presence of a protective gas, performing a second calcining of the solid product obtained in S3 at 700-900°C.
[Solution 4] The preparation method according to [Solution 3], characterized in that in S1, said cobalt source, said zinc source, and said nitrogen-containing organic ligand are subjected to the first mixing at a weight ratio of (1.5-3):1:(4-12);
   preferably, the temperature of the first reaction is 20-30°C, and the time is 10-36h;
   preferably, based on the total weight of the cobalt source, the zinc source, and the nitrogen-containing organic ligand being 1g, the amount of the first solvent is 35-50mL;
   preferably, the cobalt source is selected from water-soluble cobalt salts, preferably selected from at least one of cobalt chloride and/or cobalt nitrate;
   preferably, said zinc source is selected from water-soluble zinc salts, preferably selected from at least one of zinc nitrate, zinc sulfate, and zinc chloride;
   preferably, the nitrogen-containing organic ligand is selected from 2-methylimidazole, preferably 2-methylimidazole;
   Preferably, said first solvent is selected from C₁-C₄ monohydric alcohols, preferably methanol.
[Solution 5] The preparation method according to [Solution 3] or [Solution 4], characterized in that in S2, the condition for the first calcining includes: heating at a rate of 3-8°C/min to 700-900°C, holding at 700-900°C for 1.5-4h.
[Solution 6] The preparation method according to any one of [Solution 3] to [Solution 5], characterized in that in S3, the product obtained in S2 and said ruthenium source are subjected to said second mixing at a weight ratio of (5-15):1;
preferably, the temperature of said second mixing is 55-85°C; the time is 10-15h;
   preferably, based on the total weight of the product obtained in S2 and said ruthenium source being 1g, the amount of said second solvent is 110-130mL; preferably, said ruthenium source is selected from water-soluble ruthenium salts, preferably RuCl₃;
   preferably, said second solvent is selected from weakly basic organic solvents, preferably N-methylpyrrolidone.
[Solution 7] The preparation method according to any one of [Solution 3] to [Solution 6], characterized in that said reducing agent is selected from NaBH₄ and/or hydrogen, preferably NaBH₄;
   preferably, based on the weight of said ruthenium source being 1g, the amount of said reducing agent is 4-8 g;
   preferably, the temperature of said in-situ reduction reaction is 20-30°C; the time is 0.5-2 h.
[Solution 8] The preparation method according to any one of [Solution 3] to [Solution 7], characterized in that in S4, the condition for the second calcining includes: heating at a rate of 8-15°C/min to 700-900°C, holding at 700-900°C for 1.5-4h.
[Solution 9] A Ru-containing water electrolysis hydrogen evolution catalyst prepared by the preparation method according to any one of [Solution 3] to [Solution 8].
[Solution 10] A method for hydrogen production by water electrolysis, characterized in that said method comprises: in the presence of a Ru-containing water electrolysis hydrogen evolution catalyst, passing an electric current through an electrolyte to produce hydrogen; wherein said Ru-containing water electrolysis hydrogen evolution catalyst is the Ru-containing water electrolysis hydrogen evolution catalyst according to any one of [Solution 1], [Solution 2], and [Solution 9].

### Examples

The present invention will be described in detail below through examples and comparative examples. In the following examples, unless otherwise specified, the methods are conventional; the reagents and materials used, unless otherwise specified, can be obtained commercially.

The contents of Co, Zn, Ru, N, and O elements were determined by inductively coupled plasma optical emission spectrometry (ICP-OES) with the instrument of iCAP 6300 from ThermoFisher.

X-ray photoelectron spectroscopy (XPS) was obtained using a PHI Quantera SXM instrument, with a monochromatic Al target (E=1486.68 eV), 200 eV (Survey) (full spectrum), 50 eV (fine spectrum), energy step: 1.000 eV (full spectrum), 0.100 eV (fine spectrum). Binding energy was corrected using the C 1s peak (284.8 eV).

The following examples are used to illustrate the preparation of the carbon nanotube-supported nitrogen-doped catalyst of the present invention.

### Example 1

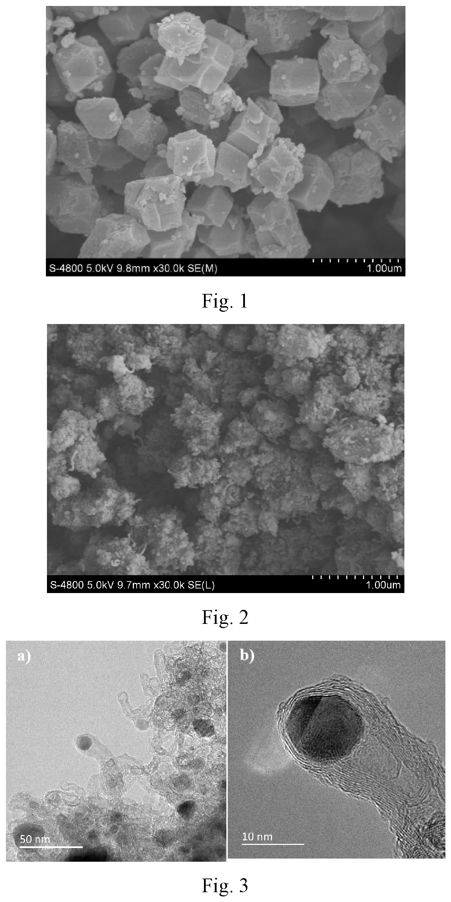

S1: 0.3 g of zinc nitrate (Zn(NO₃)₂·6H₂O, 1 mmol) and 0.6 g of cobalt nitrate (Co(NO₃)₂·6H₂O, 2.06 mmol) were weighed and dissolved in 50mL of methanol to obtain solution A. Then, 1.64 g of 2-methylimidazole (20 mmol) was dissolved in 50mL of methanol to obtain solution B. The two solutions were uniformly mixed, stirred at room temperature for 12 h. The product was washed by centrifugation with ethanol and dried at 60°C for later use. Figure 1 shows the SEM image of the sample, which exhibited a regular dodecahedral morphology with an average size of 500 nm.

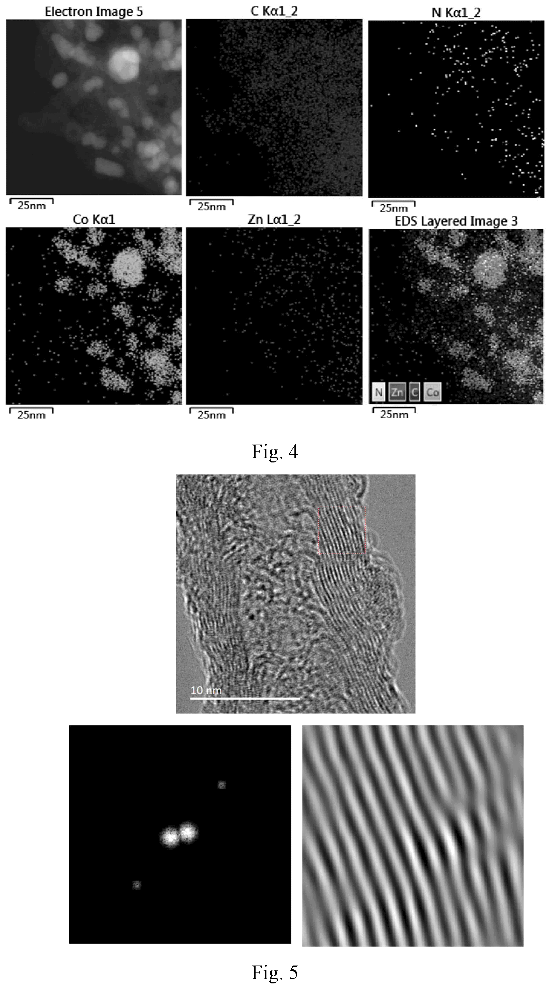

S2: 1 g of the dried above sample was weighed, mixed and ground with 0.5 g of melamine, then placed in a tube furnace. Under argon atmosphere, with argon flow rate adjusted to 20mL/min, the mixture was heated at a ramp rate of 5°C/min to 950°C, held for 2 h, and then naturally cooled to room temperature to obtain a black powder. As shown in Figure 2 for its microscopic morphology, the original polyhedral morphology transformed into a carbon tube structure after calcining. Transmission electron microscopy characterization in Figure 3 shows carbon tubes coating black particles, with carbon tube diameter of 10-20 nm. Further STEM energy-dispersive X-ray spectroscopy (EDS) mapping result (Figure 4) shows that the black particles are cobalt particles, with Co particle size about 10 nm. As shown in Figure 5, Fourier transform of the transmission electron micrograph of the carbon tube structure clearly showed a large number of dislocation structures, indicating that the calcined carbon tube material was rich in surface defects. Elemental content was determined using ICP.

According to the ICP result analysis, the composition of the sample after high-temperature calcining of Zn/Co-ZIF material was: C: 52wt%, Co: 42.5wt%, Zn: 2.5wt%, N: 3wt%, and a small amount of O element.

S3: 30 mg of RuCl₃ was weighed and dissolved in 40mL of NMP. Then, 0.3 g of the above black powder was added, ultrasonicated for 2 h, and then heated with stirring at 60°C for 12 h. Subsequently, 2mL of NaBH₄/NMP solution (NaBH₄ concentration 0.1 g/mL) was slowly added dropwise, stirred at room temperature for 1 h, then 10mL of acetone solution was added. The mixture was separated by centrifugation, washed three times with ethanol, and dried under vacuum at 60°C for 2 h.

S4: The above catalyst was heated under Ar atmosphere at a ramp rate of 10°C/min to 700°C, held for 2 h, and then naturally cooled to room temperature to obtain a catalyst. The catalyst composition was C: 51wt%, Co: 41.7wt%, Zn: 0.5wt%, N: 2.8wt%, Ru: 4wt%. The proportion of the ruthenium element existing as RuN was 83.6wt%.

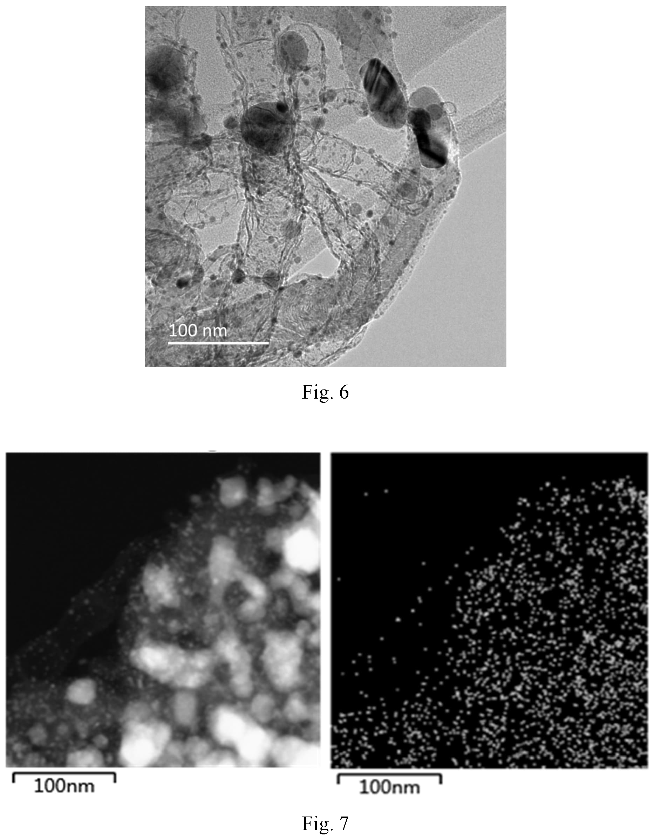

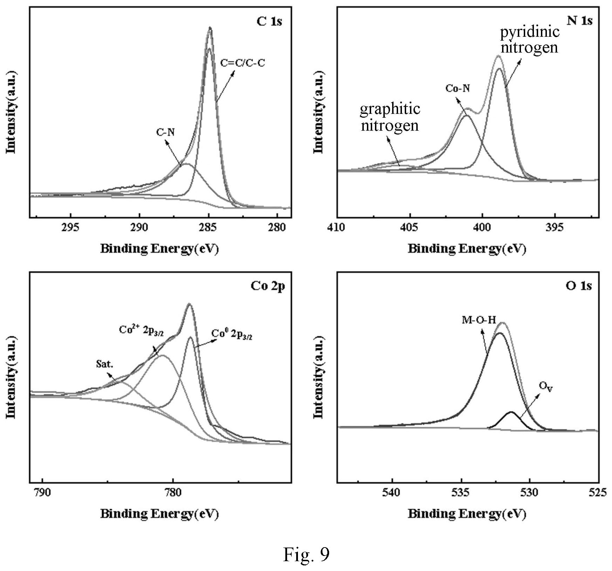

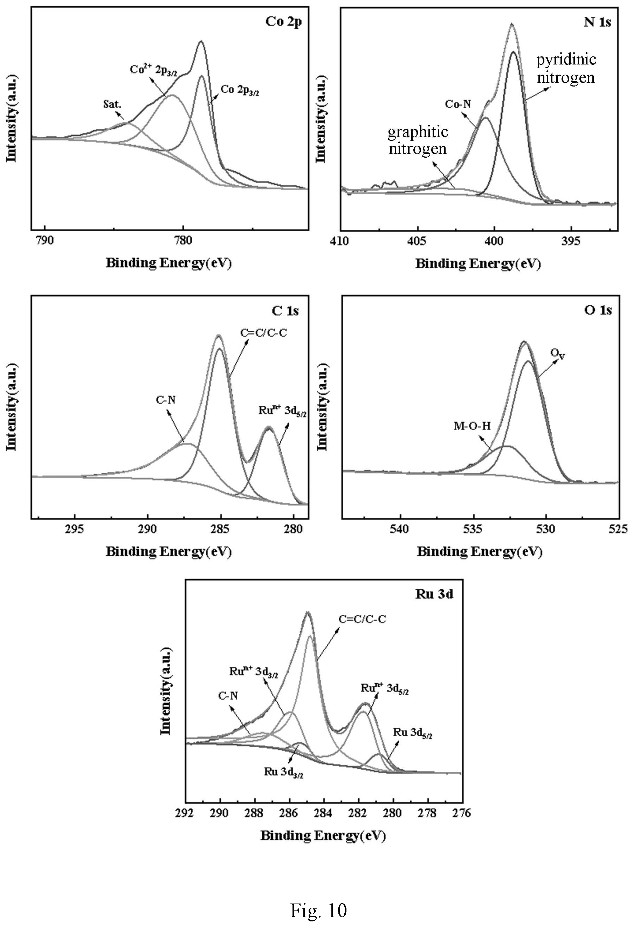

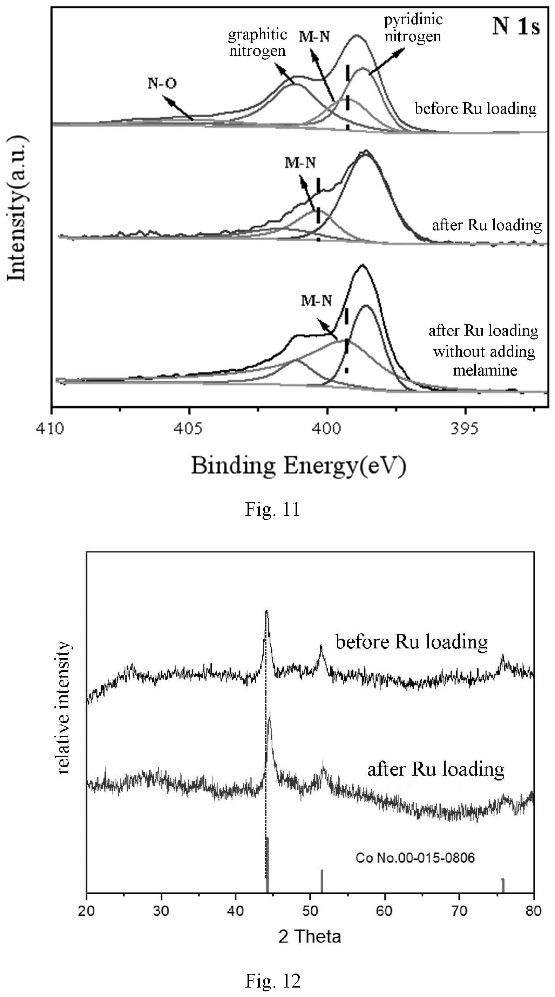

The microscopic morphology of the catalyst is shown in Figure 6. After Ru loading and the second calcining, the carbon tube structure became thicker, with a tube diameter of about 50 nm and two different sizes of metal particles distributed thereon. STEM-EDS mapping (Figure 7) shows that the large particles (about 50 nm) were Co structures, and the small particles (about 2 nm) were Ru, uniformly dispersed on the carbon tube surface. Fourier transform of the layered structure of the carbon tube showed that the carbon tube structure was a well-crystallized graphitic structure with obvious defect structures. The presence of defect sites on the carbon carrier increased the interaction between Ru and the carrier, enhancing the adsorption amount and dispersion degree of Ru on its surface. To investigate the existence state of the active components of the catalyst, XPS characterization was performed on the materials before and after Ru loading, with results shown in Figures 9 and 10. It can be seen from Figure 9 that Co existed in multiple valence states including zero-valent and high-valent; among them, N element existed in two forms with higher activity: pyridinic N and metal-N, while the proportion of inert graphitic N was very small; it can also be seen from the XPS of C result that there were clear C-N bonds, thereby indicating that Co existed as CoN and metallic Co (elemental Co and Co-Ru alloy). The XPS of O element mainly showed surface hydroxyl O and a small amount of oxygen vacancies, but the overall O content was low. Comparing the XPS of the sample after Ru loading (Figure 11), compared to the sample before Ru loading, the XPS spectrum of Ru (Figure 10) showed that Ru existed in two forms: zero-valent and high-valent; the XPS spectrum of N showed a significant shift, especially the peak position of metal-N; meanwhile, the binding energy of C-N in the XPS spectrum of C also changed accordingly. These indicated that the added Ru bonded with the N element, causing changes in the binding energies of N with metal and C elements. At the same time, XRD characterization results before and after Ru loading (Figure 12) showed that after Ru loading, the Co peak shifted and became relatively broadened, indicating the presence of a RuCo alloy.

### Example 2

The catalyst was prepared according to the method of Example 1, except that in step S2, the condition "heated at a ramp rate of 5°C/min to 800°C" was used instead of "heated at a ramp rate of 5°C/min to 950°C" to produce the catalyst. According to the ICP result analysis, the catalyst had a composition of C: 51.5wt%, Co: 41wt%, Zn: 1.2wt%, N: 2.5wt%, Ru: 3.5wt%. The proportion of the ruthenium element existing as RuN was 85.2wt%.

### Example 3

The catalyst was prepared according to the method of Example 1, except that in step S2, the condition "heated at a ramp rate of 5°C/min to 700°C" was used instead of "heated at a ramp rate of 5°C/min to 950°C" to produce the catalyst. The catalyst had a composition of C: 49wt%, Co: 44.7wt%, Zn: 2.5wt%, N: 2wt%, Ru: 2.8wt%. The proportion of the ruthenium element existing as RuN was 84.3wt%.

### Example 4

The catalyst was prepared according to the method of Example 1, except that in step S2, the condition "heated at a ramp rate of 5°C/min to 1100°C" was used instead of "heated at a ramp rate of 5°C/min to 950°C" to produce the catalyst. The catalyst had a composition of C: 54.5wt%, Co: 38wt%, N: 3wt%, Ru: 4.5wt%. The proportion of the ruthenium element existing as RuN was 84.1wt%.

### Example 5

The catalyst was prepared according to the method of Example 1, except that in step S4, the condition "heated at a ramp rate of 10°C/min to 900°C" was used instead of " heated at a ramp rate of 10°C/min to 700°C" to produce the catalyst. The catalyst had a composition of C: 57.5wt%, Co: 35wt%, N: 3wt%, Ru: 4.8wt%. Although the loaded Ru proportion was relatively high, the increase in the second calcining temperature led to an increase in Ru particle size. The proportion of the ruthenium element existing as RuN was 75.6wt%.

### Example 6

The catalyst was prepared according to the method of Example 1, except that the amounts of zinc nitrate and cobalt nitrate were different. Specifically, in S1, the condition "0.15 g of zinc nitrate (Zn(NO₃)₂·6H₂O, 0.5 mmol) and 0.3 g of cobalt nitrate (Co(NO₃)₂·6H₂O, 1.03 mmol) were weighed and dissolved in 50mL of methanol to obtain solution A" was used instead of "0.3 g of zinc nitrate (Zn(NO₃)₂·6H₂O, 1 mmol) and 0.6 g of cobalt nitrate (Co(NO₃)₂·6H₂O, 2.06 mmol) were weighed and dissolved in 50mL of methanol to obtain solution A". The particle size of the Zn/Co-ZIF material was about 250 nm. According to the ICP result analysis, the resulting catalyst had a composition of C: 53.8wt%, Co: 39wt%, Zn: 0.1wt%, N: 3wt%, Ru: 4.3wt%. The proportion of the ruthenium element existing as RuN was 85.8wt%.

### Example 7

The catalyst was prepared according to the method of Example 1, except that in step S4, the condition "heated at a ramp rate of 10°C/min to 950°C" was used instead of "heated at a ramp rate of 10°C/min to 700°C" to produce the catalyst. According to the ICP result analysis, the Ru loading content of the catalyst was 3.0wt%. The proportion of the ruthenium element existing as RuN was 70.3wt%.

### Example 8

The catalyst was prepared according to the method of Example 1, except that in step S4, the condition "heated at a ramp rate of 10°C/min to 800°C" was used instead of "heated at a ramp rate of 10°C/min to 700°C" to produce the catalyst. According to the ICP result analysis, the Ru loading content of the catalyst was 3.8wt%. The proportion of the ruthenium element existing as RuN was 78.6wt%.

### Example 9

The catalyst was prepared according to the method of Example 1, except that the ratio of zinc nitrate to cobalt nitrate was different. Specifically, in S1, the condition "0.45 g of zinc nitrate (Zn(NO₃)₂·6H₂O, 1.55 mmol) and 0.45 g of cobalt nitrate (Co(NO₃)₂·6H₂O, 1.55 mmol) were weighed and dissolved in 50mL of methanol to obtain solution A" was used instead of "0.3 g of zinc nitrate (Zn(NO₃)₂·6H₂O, 1 mmol) and 0.6 g of cobalt nitrate (Co(NO₃)₂·6H₂O, 2.06 mmol) were weighed and dissolved in 50mL of methanol to obtain solution A" to produce the catalyst. After Ru loading, the catalyst had a composition of C: 62wt%, Co: 26wt%, Zn: 3.6wt%, N: 3.7wt% with the Ru loading content of 4.7wt%. The proportion of the ruthenium element existing as RuN was 86.9wt%.

### Example 10

The catalyst was prepared according to the method of Example 1, except that in step S2, the condition "1 g of the dried above sample was weighed, mixed and ground with 1 g of melamine" was used instead of "1 g of the dried above sample was weighed, mixed and ground with 0.5 g of melamine" to produce the catalyst. According to the ICP result analysis, the Ru loading content of the catalyst was 1.8wt%. The proportion of the ruthenium element existing as RuN was 86.2wt%.

### Comparative Example 1

The catalyst was prepared according to the method of Example 1, except that melamine was not added during the first calcining in S2 to produce the catalyst. According to the ICP result analysis, the N loading content of the catalyst was 1.1wt%. With the decrease in the content of N element, the content of RuN was relatively small, and more Ru existed as metallic Ru and RuCo alloy. The proportion of the ruthenium element existing as RuN was 4.3wt%.

### Comparative Example 2

The catalyst was prepared according to the method of Example 1, except that urea was used instead of melamine during the first calcining in S2 to produce the catalyst. According to the ICP result analysis, the N loading content of the catalyst was 1.3wt%. The proportion of the ruthenium element existing as RuN was 15.3wt%.

### Comparative Example 3

The catalyst was prepared according to the method of Example 1, except that the second calcining at high temperature (S4) was not performed after loading Ru by low-temperature reduction to produce the catalyst. According to the ICP result analysis, the Ru loading content of the catalyst was 4.2wt%. The proportion of the ruthenium element existing as RuN was 6.4wt%.

### Comparative Example 4

The catalyst was prepared according to the method of Example 1, except that in S1, zinc was not added to the precursor; only Co was added to obtain Co-ZIF as the precursor to produce the catalyst. According to the ICP result analysis, the Ru loading content of the catalyst was 0.2wt%.

### Test example 1

A scanning electron microscope (SEM) was used to determine the SEM images of the Zn/Co-ZIF material and the sample after high-temperature calcining of the Zn/Co-ZIF material. A transmission electron microscope (TEM) was used to determine the TEM image of the sample and catalyst after high-temperature calcining of the Zn/Co-ZIF material. A high-resolution transmission electron microscopy (HRTEM) was used to determine the HRTEM image of the sample and catalyst after high-temperature calcining of the Zn/Co-ZIF material. An X-ray photoelectron spectroscopy (XPS) was used to determine XPS spectra of Co, N, or C elements in the sample after high-temperature calcining of Zn/Co-ZIF material.

### Test example 2

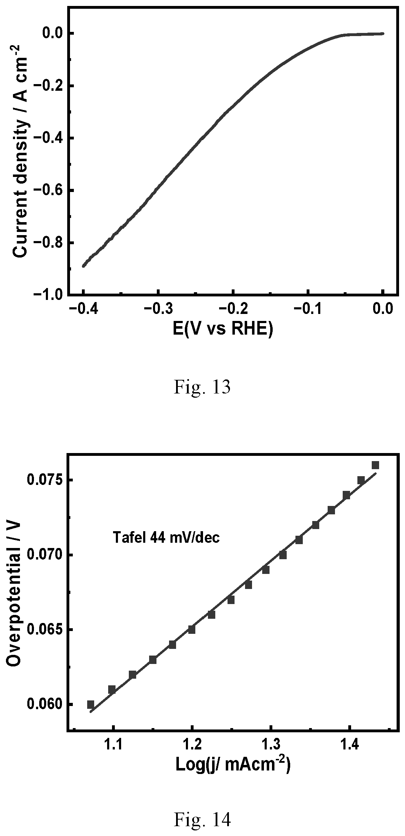

The catalysts prepared in examples and comparative examples were fully ground. 10 mg of each catalyst was weighed, 1mL of ethanol solution containing Nafion (Nafion volume content 4%) and 1mL of isopropanol solution were added, and ultrasonicated to disperse uniformly. 20 µL of the above dispersion (0.2 mg catalyst) was measured and dropwise added onto a rotating disk electrode for HER performance measurement. A Shanghai Chenhua 760E electrochemical workstation was used in the electrochemical test experiment. Before testing, the electrolyte was purged with N2 for about 30 min to saturate the electrolyte with N2. Subsequently, a three-electrode test system was assembled, and the voltage test range was set from -0.1 to 0.1 V (vs. RHE), the number of test cycles was set to 20, to fully activate the sample and expose active sites completely; then, H₂ was bubbled into the electrolyte using a hydrogen generator for 30 min to fully saturate the electrolyte with H₂, and LSV testing was performed from -0.6 to 0V. 1 mol/L KOH was used as the electrolyte. At a current density of 10 mA/cm², the HER overpotential of each catalyst prepared in examples and comparative examples is shown in Table 1. The LSV curve for hydrogen evolution performance of the sample and catalyst of Zn/Co-ZIF material after high-temperature calcining of Example 1 of the present invention is shown in Figure 13.

Electrochemical surface area (ECSA) is a key characteristic parameter for describing, analyzing, and comparing electrocatalysts. Determining the mass activity of a given catalyst is related to this parameter, which can lead to the material benchmarking. In the ECSA testing, the current-voltage curve in the non-Faradaic region is tested. Its numerical value can be directly presented by the electrochemical double layer capacitance (C_{dl}).

When using cyclic voltammetry to calculate the electrochemical surface area (ECSA) of an electrode, nitrogen is continuously purged for 20 min. During the testing process, nitrogen is continuously purged. CV curves are measured at different scan rates (10-100 mV/s). Half of the current difference at the midpoint of the potential range is plotted on the vertical axis against the scan rate on the horizontal axis. A linear fit is performed, and the slope of the obtained line is the electrochemical double layer capacitance. The effective electrochemical surface area is calculated using the following equation. $ECSA = {C}_{dl} / {C}_{s}$

**Table 1**

| No. | Overpotential, mV |
|---|---|
| Example 1 | 43 |
| Example 2 | 48 |
| Example 3 | 58 |
| Example 4 | 35 |
| Example 5 | 55 |
| Example 6 | 35 |
| Example 7 | 47 |
| Example 8 | 40 |
| Example 9 | 33 |
| Example 10 | 60 |
| Comparative Example 1 | 113 |
| Comparative Example 2 | 95 |
| Comparative Example 3 | 88 |
| Comparative Example 4 | 135 |

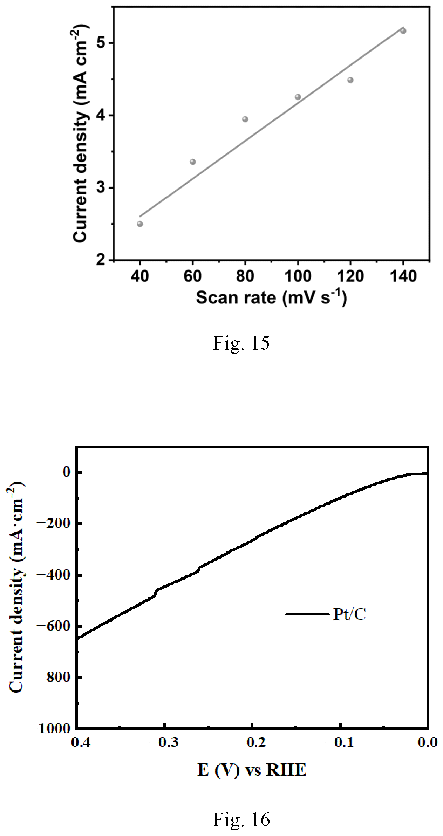

It can be seen from Figure 13 that after loading a small amount of Ru (Ru loading: 0.1 mg/cm²), the catalyst exhibited a hydrogen evolution overpotential of 43 mV at a current density of 10 mA/cm² and 130 mV at a current density of 100 mA/cm², with performance close to that of a commercial Pt/C catalyst (Pt loading: 0.4 mg/cm²) (as shown in Figure 15). The overpotentials of the water electrolysis hydrogen evolution catalysts prepared in Examples 1-10 and Comparative Examples 1-4 were within 70 mV. In Comparative Example 1, no nitrogen doping agent was used; in Comparative Example 2, urea was used as the nitrogen doping agent, resulting in low nitrogen content after doping, and only a small amount of RuN was formed according to characterization. As a result, the overpotentials of the water electrolysis hydrogen evolution catalysts from Comparative Examples 1 and 2 increased significantly, indicating that the interaction between nitrogen and metal (especially between nitrogen element and ruthenium element) could significantly enhance the hydrogen evolution activity of the catalyst. In Comparative Example 3, the second high-temperature calcining was not performed after Ru loading, and only a small amount of RuN was formed according to characterization. The hydrogen evolution performance was significantly lower than that of the samples subjected to the second calcining. The study showed that high-temperature calcining allowed Ru to form better interactions with the carrier and Co through the formation of nitrides and alloys, thereby improving the intrinsic activity of the catalyst. In Comparative Example 4, no Zn was added during the synthesis of the carrier precursor; instead, Co-ZIF was synthesized, and then subjected to the first high-temperature calcining. Due to the lack of formation of more defect sites, it was difficult to load Ru element onto the carrier via the low-temperature reduction process, thus resulting in a very low Ru loading content.

Furthermore, although the Ru loading ratio was relatively high in Example 5, the increase in the secondary calcining temperature led to an increase in Ru particle size, resulting in low Ru utilization efficiency.

In Examples 6 and 9, both the amounts and ratios of the zinc and cobalt sources were adjusted. Compared with Example 1, due to the reduced amounts used in preparing the catalyst of Example 6, the synthesized CoZn-ZIF exhibited a smaller particle size, which led to a more sufficient high-temperature carbonization process and an increase in the loaded Ru content. Correspondingly, in Example 9, the proportions of both Zn and Co were increased, resulting in the formation of more defect sites and increasing the Ru loading rate, albeit with a decrease in Co content. This indicates that when the used amounts and ratio of zinc source and cobalt source meet the preferred conditions, the hydrogen evolution activity of the catalyst can be further improved. In Example 10, the addition ratio of the nitrogen doping agent is increased, and the result shows that the nitrogen doping agent affects the hydrogen evolution activity of the catalyst.

The preferred embodiments of the present invention have been described in detail above, but the present invention is not limited thereto. Within the scope of the technical concept of the present invention, various simple modifications can be made to the technical solution of the present invention, including the combination of various technical features in any other suitable manner. These simple modifications and combinations should also be regarded as the disclosed content of the present invention and all belong to the protection scope of the present invention.

## Claims

1. A carbon nanotube-supported nitrogen-doped catalyst, wherein the catalyst has a carbon nanotube structure as carrier, with cobalt and ruthenium as active components, wherein, relative to the total amount of the catalyst, the content of cobalt element is 30-45wt%, the content of ruthenium element is 1-7wt%, and, relative to all ruthenium elements, the proportion of ruthenium element existing in the form of RuN is 60wt%-90wt%, preferably 65wt%-88wt%, more preferably 70wt%-85wt%.

2. The catalyst according to claim 1, wherein the ruthenium element also exists in forms of metallic ruthenium and cobalt-ruthenium alloy.

3. The catalyst according to claim 1 or 2, wherein the content of nitrogen element is 2-5wt%, and the nitrogen element exists in at least one form of metal-N, pyridinic nitrogen, and graphitic nitrogen.

4. The catalyst according to any one of claims 1-3, wherein the catalyst satisfies at least one of the following conditions:
The average particle size of metallic ruthenium is 2-5 nm;
The diameter of the carbon nanotube is 30-70 nm;
The carbon nanotubes have defect sites;
The oxygen content is 2wt% or less, preferably 1% or less, further preferably 0.5% or less;
The zinc content is 5wt% or less, preferably 4% or less.

5. A method for preparing a carbon nanotube-supported nitrogen-doped catalyst, wherein the preparation method comprises the following steps:
S1. Mixing a cobalt source, a zinc source, and a nitrogen-containing organic ligand in a solvent to carry out a first reaction, separating and drying to obtain a CoZn-ZIF precursor;
S2. Under an inert gas atmosphere and in the presence of a nitrogen doping agent, carbonizing and nitrogen-doping the CoZn-ZIF precursor obtained in S1 to obtain a carbon nanotube-coated cobalt structural material, wherein in said nitrogen doping, an organic compound having 3 or more nitrogen atoms as the nitrogen doping agent is used;
S3. Bringing the structural material obtained in S2 into contact with a ruthenium source to perform ruthenium loading, and reducing the ruthenium loaded onto the structural material with a reducing agent;
S4. Calcining the product from step S3 at 600-1000°C to obtain the carbon nanotube-supported nitrogen-doped catalyst.

6. The preparation method according to claim 5, wherein the conditions of step S1 satisfy at least one of the following conditions:
the cobalt source is selected from water-soluble cobalt salts, preferably selected from at least one of cobalt chloride and cobalt nitrate;
the zinc source is selected from water-soluble zinc salts, preferably selected from at least one of zinc nitrate, zinc sulfate, and zinc chloride;
the nitrogen-containing organic ligand is an optionally substituted imidazole compound, preferably 2-methylimidazole;
the weight ratio of the cobalt source, the zinc source, and the nitrogen-containing organic ligand is (0.5-4):1:(2-14), preferably (0.8-3):1:(3-12);
the solvent is selected from C₁-C₄ monohydric alcohols, preferably methanol or ethanol, based on the total weight of the cobalt source, the zinc source, and the nitrogen-containing organic ligand being 1g, the amount of the solvent is 20-60mL, preferably 35-50mL;
the temperature of the first reaction is 20-30°C, and the time is 10-36h;
the separation is performed by any one means selected from filtration and centrifugation;
the drying temperature is 40-80°C, preferably 50-70°C.

7. The preparation method according to claim 5 or 6, **characterized in that** the conditions of step S2 satisfy at least one of the following conditions:
the conditions for carbonizing and nitrogen doping are: heating at a rate of 1-10°C/min to a temperature of 600-1200°C and holding for 1.5-4 hours, preferably the heating rate is 3-8°C/min, preferably heating to 700-1100°C, preferably holding for 2-3 hours;
the organic compound having 3 or more nitrogen atoms is a 5-10 membered cyclic organic compound having 3 or more ring-forming nitrogen atoms, preferably selected from at least one of triazole-based compounds, triazine-based compounds, and melamine, more preferably selected from at least one of optionally substituted 1,2,3-triazole, optionally substituted 1,2,4-triazole, optionally substituted 1,2,3-triazine, optionally substituted 1,2,4-triazine, optionally substituted 1,2,3-triazine, and melamine;
the weight ratio of the CoZn-ZIF precursor to the nitrogen doping agent is 1:0.1-5, preferably 1:0.2-1.

8. The preparation method according to any one of claims 5-7, wherein the conditions of step S3 satisfy at least one of the following conditions:
the weight ratio of the structural material obtained in S2 to the ruthenium source is 1-100:1, preferably 5-50:1, further preferably 5-20:1;
the ruthenium source is selected from water-soluble ruthenium salts, preferably ruthenium chloride (RuCl₃);
the contact is carried out in the presence of a solvent, the solvent preferably being a nitrogen-containing organic solvent, more preferably selected from at least one of pyrrole, pyrazole, imidazole, pyridine, pyrimidine, pyrrolidinone, and N-vinylpyrrolidone;
the contacting condition includes: the contacting temperature is 40-80°C, preferably 50-70°C, the contacting time is 8-15 hours, preferably 10-12 hours, optionally an ultrasonic treatment is performed during contacting;
The weight ratio of the reducing agent to the ruthenium source is 4-15:1, preferably 5-10:1;
the condition for the reduction step includes: contacting the reducing agent with the ruthenium-loaded structural material in the presence of a solvent, the solvent preferably being a nitrogen-containing organic solvent, more preferably selected from at least one of pyrrole, pyrazole, imidazole, pyridine, pyrimidine, pyrrolidinone, and N-vinylpyrrolidone, the reducing agent is NaBH₄ or hydrogen, preferably the condition for the reduction step includes: adding a NaBH₄ solution to the solution containing the ruthenium-loaded structural material, the solvent of the NaBH₄ solution is preferably the same as the solvent in the contacting step; after the reduction step, further adding a precipitating agent to precipitate the reduction product, preferably the precipitating agent is acetone;
the temperature of the reduction reaction is 15-40°C, preferably 20-30°C, and the time of the reduction reaction is 0.5-2 hours, preferably 1-1.5 hours; drying the product of the reduction reaction, the drying condition includes: in vacuum, temperature 40-80°C, preferably 50-70°C, drying time 1.5-4 hours, preferably 2-3 hours.

9. The preparation method according to any one of claims 5-8, wherein the calcining condition of step S4 includes:
under an inert gas atmosphere, heating at a rate of 5-20°C/min to a temperature of 600-1000°C and holding for 1.5-4 hours, preferably the heating rate is 8-15°C/min, preferably heating to 650-950°C, further preferably heating to 700-950°C, preferably holding for 2-3 hours.

10. Electrolysis electrode, comprising the carbon nanotube-supported nitrogen-doped catalyst according to any one of claims 1-4, or a carbon nanotube-supported nitrogen-doped catalyst prepared according to the method of any one of claims 5-9.

11. A process for hydrogen production by water electrolysis, in which the carbon nanotube-supported nitrogen-doped catalyst according to any one of claims 1-4, or a carbon nanotube-supported nitrogen-doped catalyst prepared according to the method of any one of claims 5-9, is used.

12. A process for hydrogen production by water electrolysis, in which in an alkaline or alkaline membrane water electrolysis hydrogen production reaction, the carbon nanotube-supported nitrogen-doped catalyst according to any one of claims 1-4, or a carbon nanotube-supported nitrogen-doped catalyst prepared according to the method of any one of claims 5-9, is used.
